# EUROPEAN PATENT APPLICATION

(11) **EP 0 846 538 A2**
(43) Date of publication of application: **10.06.1998**
(21) Application number: 97309833.8
(22) Date of filing: 05.12.1997
(51) Int. Cl.: B29C 33/56, B29K 63/00

(54) **Metal mold for molding epoxy resin**

(30) Priority: 05.12.1996 JP 325708/96; 11.03.1997 JP 56239/97
(71) Applicant: TOKAI RUBBER INDUSTRIES, LTD., Komaki-shi Aichi 485 (JP); SUMITOMO ELECTRIC INDUSTRIES, LIMITED, Osaka 541 (JP)
(72) Inventor: Sasai, Kensuke, Komaki-shi, Aichi 485 (JP)
(74) Representative: Wakerley, Helen Rachael

(57) **Abstract**

A metal mold for molding an epoxy resin where epoxy resin materials are injected and solidified so as to produce an epoxy resin molding in a desired shape, wherein a portion of a mold face with which the epoxy resin materials come into contact is coated with inorganic matter by a vapor deposition method so as to form a film providing mold releasability from a solidified epoxy resin.

## Description

### FIELD OF THE INVENTION

The present invention relates to a metal mold for molding an epoxy resin, the mold being excellent in mold releasability of the epoxy resin in transfer molding and the like.

### BACKGROUND OF THE INVENTION

In general, epoxy resins highly filled with fillers such as silica and the like are used as a semiconductor package for semiconductor devices, a plastics high-accuracy connector for high-accuracy parts, and the like. These epoxy resins are formed into epoxy resin moldings by transfer molding, injection molding and the like with metal molds made of die steel, power high speed steel, cemented carbide and the like. Since such solidified epoxy resins are poor in mold releasability from the metal molds, improved mold releasability has been attempted by kneading a mold release agent into the epoxy resin materials in advance.

However, even if the mold release agent is kneaded into the epoxy resin materials themselves as has been in the conventional manner, the actual fact has been that mold releasability is not sufficiently improved. Therefore, there has been a problem that portions of a sprue, a runner, a gate, a molding and the like and portion of the solidified epoxy resins such as a burr and the like stick to and remain on faces of the mold. Since such remaining resins strongly adhere to the mold faces, they cannot be removed by an air blast, and they cannot completely be removed until being scraped off with tools such as a spatula and the like. Consequently, the removal of the remaining resins has to be manually conducted, which is a main factor of deterioration in terms of productivity of the molding operation. Further, if the removal of the remaining resins is incomplete in a continuous and repetitive molding operation, the remaining resins tend to peel off and intervene in the metal mold, which causes troubles such that a defective product is produced due to insufficient clamping and the metal mold itself may be damaged due to the fillers contained in the epoxy resin materials.

### SUMMARY OF THE INVENTION

The present invention was made to reduce or even eliminate the above problems. Thus, the present invention aims to provide an excellent metal mold for molding an epoxy resin wherein the mold releasability of the epoxy resin is improved.

To accomplish the above aim, the present invention provides a metal mold for molding an epoxy resin where epoxy resin materials are injected and solidified so as to produce an epoxy resin molding in a desired shape, wherein a portion of a mold face with which the epoxy resin materials come into contact is coated with inorganic matter by a vapor deposition method so as to form a film providing mold releasability from a solidified epoxy resin.

The inventors of the present invention compiled a series of studies directed to the improvement of the mold releasability of a metal mold for molding an epoxy resin. In the course of these studies, the inventors found that, by coating a portion of a mold face with which the resin comes into contact with inorganic matter by a vapor deposition method, a mold releasability-providing film is formed which reduces the adhesion between a solidified epoxy resin and the metal mold and markedly improves the mold releasability from the solidified epoxy resin.

### BRIEF DESCRIPTION OF THE DRAWINGS

The invention will be more fully described and will be better understood from the following description, taken with the appended drawings, in which:
Fig. 1 is a perspective view of one embodiment of a metal mold for molding an epoxy resin according to the present invention;
Fig. 2 is an expanded sectional view of a mold releasability-providing film in a two-layer structure;
Fig. 3 is an expanded sectional view of a mold releasability-providing film in a three-layer structure;
Fig. 4 is an schematic view showing a method of measuring adhesion of a remaining resin; and
Fig. 5 is an schematic view showing a condition in which a solidified epoxy resin breaks in a resin injection hole and remains therein.

### DETAILED DESCRIPTION OF THE PREFERRED EMBODIMENTS

The following are detailed descriptions of the embodiments of the invention.

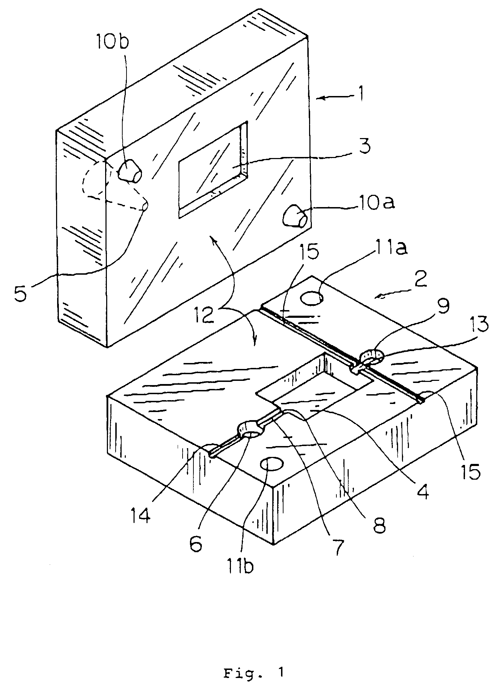

Fig. 1 shows a metal mold for molding an epoxy resin of an embodiment according to the present invention. In the figure, 1 is an upper mold in which a cavity 3 is concavely formed on one of two mold faces 12, and 2 is a lower mold in which a cavity 4 is concavely formed on the other mold face 12. A resin injection hole 5 is drilled on the upper mold 1. On the lower mold 2, a resin injection pot 6 is concavely formed at a location which corresponds to the resin injection hole 5, and a resin injection path 7 in the form of a groove extends formed from the resin injection pot 6 to the cavity 4. An opening of the resin injection path 7 into the cavity 4 forms a gate 8. On the opposite side of the gate 8 of the cavity 4, a resin pool 9 is formed which is connected to the cavity 4 via a resin discharge path 13. Air vents 14 and 15 are formed at the resin injection pot 6 and at the resin discharge path 13, respectively. Metal mold interfit pins 10a and 10b are projectedly attached to the mold face 12 of the upper mold 1. Metal mold interfit holes 11a and 11b are concavely formed on the mold face 12 of the lower mold 2 so as to engage the metal mold interfit pins 10a and 10b and align the upper mold 1 with the lower mold 2.

Epoxy resin materials for use in the present invention are prepared by mixing an epoxy resin (a main agent), a hardener, a hardening accelerator and a filler in a given ratio. In addition, a coloring agent, a mold release agent, a silane coupling agent, a fire retardant, a fire retarding assistant and the like may be mixed thereto, if desired.

For the epoxy resins (the main agents), there are no specific limitations as long as they contains two or more epoxy groups in one molecule, and are used as epoxy resin materials. For example, the epoxy resins may be compounds in which phenols represented by novolak-type epoxy resins and aldehydes of a novolak resin are epoxidized, glycidyl ester type epoxy resins obtained by reacting bisphenol A, bisphenol F, bisphenol S and the like with polybasic acids such as a diglycidyl ether, a phthalic acid, a dimer acid and the like, glycidylamine type epoxy resins obtained by reacting polyamines such as diaminodiphenylmethane, an isocyanuric acid and the like with epichlorohydrin, linear aliphatic epoxy resins obtained by oxidizing olefin bonds with peracids such as a peracetic acid and the like, epoxy resins having a biphenyl skelton or a naphthalene cyclic skelton, a cyclo aliphatic epoxide and the like. They may be used solely or in combination.

Regarding the hardeners, there are no specific limitations as long as they undergo a hardening reaction with the epoxy resins (the main agents). For example, a phenol resin or an acid anhydride is preferable in view of transfer molding. Among those, the phenol resin is preferable from the viewpoint of mold releasability. Examples of the phenol resins include phenol resins obtained by condensing or cocondensing phenols such as phenol, cresol, xylenol, resorcin, catechol, bisphenol A, bisphenol F and the like or naphthols such as α -naphthol, β -naphthol, dihydroxy naphthalene and the like and aldehydes such as formaldehyde, acetaldehyde, propionaldehyde, benzaldehyde, salicyl aldehyde and the like under acid catalysts, phenol aralkyl resins having a xylylene group synthesized from phenols and dimethoxyparaxylene, and the like. They are used solely or in combination. As for a mixing ratio of the epoxy resin and the hardener, it is preferable to mix them so that the ratio of the number of epoxy groups in the epoxy resin and the number of OH groups in the hardener is 0.7 to 1.3.

The hardening accelerators may be amines and its derivatives or their salts, imidazoles and its derivatives or their salts, 1,8-diazabicyclo[5.4.0]-7-undecene and its derivatives or their salts, all kinds of onium compounds and the like.

For the fillers, there are no specific limitations. Examples of the fillers may be crystalline silica, molten silica, alumina, aluminium hydroxide, magnesium hydroxide, calcium sulfate, mica, glass powder, calcium carbonate, talc, molybdenum disulfide, kaolinite, magnesium carbonate, calcium fluoride, magnetite and the like. They are used solely or in combination. The particle diameter of the fillers is not limited, however, it is preferable that the average particle diameter is 1 to 150 µ m. Further, the shape of the fillers is not particularly limited.

With respect to a metal mold for molding an epoxy resin according to the present invention, for example, mold faces 12 of a metal mold shown in Fig. 1 are coated with inorganic matter by a vapor deposition method so as to form a mold releasability-providing film. In this case, preferably, the mold releasability-providing film is formed on not only the insides of cavities 3 and 4, resin injection pot 6, resin injection path 7, resin discharge path 13, resin pool 9 and resin injection hole 5, but also to portions to which a burr of a solidified epoxy resin sticks such as the insides of air vents 14 and 15 and the like, which means that all the portions with which the epoxy resin materials come into contact are included. Further, the mold releasability-providing film may be formed on an area with which the epoxy resin materials do not come into contact.

Regarding materials for forming the metal molds for molding an epoxy resin, there are no specific limitations. For example, they may be alloy steels for machine structural use such as nickel chromium steel, nickel-chrome-molybdenum steel, chrome steel, chrome-molybdenum steel and the like, tool steels such as high carbon chrome steel, tungsten-chromium steel, tungsten-vanadium steel and the like, high speed steels such as tungsten-chrome-vanadium steel and the like, heat resisting steels such as chrome-molybdenum-vanadium steel and the like, various kinds of alloy steels such as H steel, nitrided steel, high strength steel, free-cutting steel, die steel, ball-bearing steel, boron steel and the like, carbon steels for machine structural use, various kinds of cast irons and cast steels, and the like. Further, carbon steels, alloy steels and the like which are carburized or nitrided may be used. Furthermore, since it is not limited to ingot steels, sintered alloys such as powder high speed steels and the like obtained by a powder metallurgy method, cemented carbide and cermet may be used. Among those, alloy steels such as SKD, SKT, SKH, SKS and the like, powder high speed steels, cemented carbide and the like may preferably be used. If desired, various kinds of thermal treatments such as hardening, tempering and the like may be conducted on the above-mentioned steel materials in advance.

In the present invention, a mold face of the metal mold made from the above-mentioned materials is coated with inorganic matter by a vapor deposition method.

Regarding the vapor deposition methods of coating with inorganic matter, there are no specific limitations. For example, there are physical vapor deposition (PVD) methods such as a vacuum deposition method, a sputtering method, an ion plating method and the like, chemical vapor deposition (CVD) methods such as a thermal CVD method, a plasma CVD method, a photochemical vapor deposition method and the like.

The PVD method is a general term for the vacuum deposition method, the sputtering method, the ion plating method and the like, in which a thin film is formed by condensation of material from a vapor phase. Among these methods, the vacuum deposition method comprises heating coating matter for vaporization under a high vacuum, and solidifying evaporated atoms on a mold face so as to form a film. The apparatus utilized therein is relatively simple and the film-forming speed is fast. The sputtering method comprises flowing an inert gas such as argon gas in the order of 10⁻¹ to 10 Pa and the like in a vessel, applying a voltage of several thousands of volts between electrodes so as to cause a glow discharge, colliding inert gas ions against a target on which a negative pressure is applied, and solidifying scattered target matter (coating matter) on a mold face, thereby producing a film which is dense and has a good adhesion in spite of the low temperature of the mold face. The ion plating method comprises ionizing heated and vaporized evaporated atoms (coating matter) of hard ceramics such as oxides, nitrides, carbides and the like under an argon glow discharge, and colliding thereof on a mold face on which a negative pressure is applied so as to solidify to thereby produce a film which is dense and has a good adhesion.

The CVD methods are methods of thermally decomposing or reducing a gaseous compound on a surface of a mold face and depositing and covering with coating matter. In this method, control of the film composition is readily conducted and control of the film thickness is accurately conducted, thereby producing a film with less defects. Among these methods, there may be the thermal CVD method in which the chemical reactions are proceeded by heating under a high temperature, the plasma CVD method in which a treatment may be conducted under a low temperature by utilizing a plasma reaction, and the like.

According to the present invention, any of the above-described methods may be adopted for coating and there are no specific limitations. As to the PVD methods, the sputtering method and the ion plating method are preferable because films having good adhesion may be obtained. As to the CVD methods, the plasma CVD method is preferable because the treatment may be conducted at a low temperature and therefore there is less deformation of a metal mold.

For the inorganic matter (coating matter) forming the mold releasability-providing film, there are no specific limitations. Specific examples of the inorganic matter may be not only metals such as tungsten, tantalum, niobium and the like, and metal compounds such as titanium nitride (TiN), titanium carbo-nitride (Ti(C, N)), titanium carbide (TiC), titanium oxide (TiO₂), titanium boride (TiB₂), tungsten carbide (WC, W₂C), silicon carbide (SiC), silicon nitride (Si₃N₄), silicon oxide (SiO₂), aluminium oxide (Al₂O₃), chromium nitride (CrN), zinc nitride (Zn₃N₂), tantalum carbide (TaC), tantalum oxide (Ta₂O₅), boron nitride (BN), cubic boron nitride (c-BN), but also non-metallic elements such as diamond like carbon (DLC), boron and the like. The mold releasability-providing film may be a single layer made of one kind of film or a multi-layer in which a number of different kinds of films are layered together.

According to the present invention, among the above-mentioned coating matters, TiN, TiC, Ti(C,N) and CrN are most preferably used for the coating matter for a metal mold for molding a resin since they provide excellent mold releasability.

In addition, TiN, TiC, Ti(C,N) or CrN may be formed on a mold face as a single layer, or two kinds or more of them may be layered in combination so as to form a multi-layer. When the mold releasability-providing film is formed by using TiN, TiC, Ti(C,N) and CrN, not only is the mold releasability improved due to reduction in adhesion with a solidified epoxy resin, but also the surface hardness of the mold face of the metal mold drastically improves (hardnesses of TiN is about 2000 mHv, TiC is about 3200 mHv and CrN is about 2000 mHv) and it becomes harder than fillers filling epoxy resin materials (for example, the hardness of crystalline silica is about 1100 mHv). For this reason, wear of the metal mold caused by friction with the fillers when the epoxy resin materials are injected into a cavity, and occurrence of burrs which tend to adhere to and remain on the mold face, may be prevented, and further, plastic deformation of the metal mold in continuous molding may also be prevented.

When a mold releasability-providing film of a multi-layer structure is formed with TiN together with either TiC or Ti(C,N), since TiC and Ti(C,N) are inferior in adhesion to base material to TiN, for example, as shown in Fig. 2, it is more preferable to form a first layer 20 made of TiN which adheres well to the base material, and then, to form a second layer 21 made of TiC or Ti(C,N) on the first layer 20 so as to form a mold releasability-providing film in a two-layer structure. Consequently, compared with the formation of a single layer of TiC or Ti(C,N), a mold releasability-providing film can be obtained which is superior in adherence to a base material 23 as well as in mold releasability.

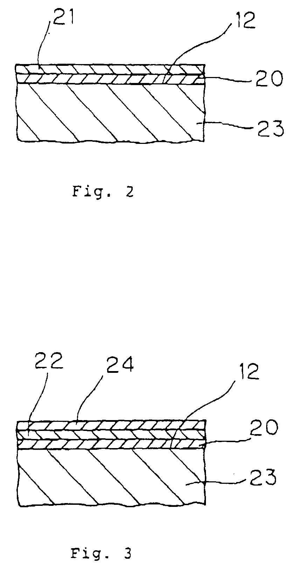

Moreover, as shown in Fig. 3, it is most preferable to form a Ti(C,N) layer 22 on a TiN layer 20 formed on a mold face, and further, form a TiC layer 24 thereon so as to form a film in a three-layer structure. Consequently, since the compositions of the layers 20, 22 and 24 changes gradually, adhesion between the layers 20, 22 and 24 is good and peeling resistance and the durability of the mold releasability-providing film is improved. When the mold releasability-providing film in the three-layer structure is formed, three steps of vapor deposition treatments may be conducted in which the TiN layer 20, the Ti(C,N) layer 22 and the TiC layer 24 are formed, respectively, or, two steps of vapor deposition treatments may be conducted in which, after depositing TiN and TiC, respectively, atmospheres in each step of the vapor deposition treatments are mixed so as to produce Ti(C,N) so that the Ti(C,N) layer 22 is formed at the interface between the TiN layer 20 and the TiC layer 24.

Even if the mold releasability-providing film is formed with coating matter other than TiN, TiC and Ti(C,N), it is preferable to form a film having high adhesion to the base material on the mold face as the first layer, and form a film which adheres well to the first layer and is excellent in mold releasability on the first layer as the second layer and the third layer.

Regarding the thickness of the mold releasability-providing film, about 0.5 to 30 µ m is preferable and about 1 to 10 µ m is more preferable. Namely, if the thickness is not more than 0.5 µ m, improvement in the mold releasability may not be sufficient and the durability of the film is inferior, while, if the thickness exceeds 30 µ m, the costs for the vapor deposition treatments increase and there is a possibility that the mold releasability-providing film itself will crack.

When mold releasability-providing films of ceramics and the like which are harder than metal mold materials, such as TiC, TiN, Ti(C,N), c-BN, DLC and the like, are formed as the above-described mold releasability-providing films, there is an advantage that the kinds of fillers which are used to fill the epoxy resin materials will not be limited. That is, in the case of a conventional metal mold in which no mold releasability-providing film is formed and the fillers are harder than the metal mold, the metal mold wears away and/or is damaged due to its inferiority in hardness compared with the fillers. Therefore, the kinds of fillers used are limited to ones whose hardness is relatively low (a maximum hardness is about 1000 to 1100 mHv of silica). On the other hand, in the present invention, there is no limitation as above and various kinds of fillers may be used in the case where the mold releasability-providing films are of ceramics and the like, which are harder than the metal mold materials.

The surface of the mold releasability-providing film preferably is provided with a mold release agent. That is, the mold releasability-providing film decreases the bonding power between a mold face and a solidified epoxy resin, and, in addition, mold releasability is further improved due to the effects of the mold release agent.

For the mold release agents, there are no specific limitations. For example, they may include natural waxes such as carnauba wax and the like, synthetic waxes, metallic salts (straight chain fatty acids (stearic acid and the like), acid amides, esters, paraffins and the like. Such mold release agents may be applied directly onto the mold face, after formation of the mold releasability-providing film, by means such as baking, spraying, brushing or the like, or they may be kneaded into the epoxy resin materials themselves in advance and transferred onto a surface of the mold releasability-providing film by repetitive molding.

Molding methods according to the present invention are not limited to transfer molding, and all kinds of molding methods such as injection molding, compression molding and the like may be included, and molding conditions are not particularly limited.

The present invention will hereinafter be described by reference to the following Examples and Comparative Examples.

### EXAMPLE 1

High speed steel was used as a metal mold material, and on which a cavity and the like were formed by cutting work and/or electrical discharge machining so that a desired metal mold was obtained (see Fig. 1). Thereafter, a mold releasability-providing film of a 3 µ m thick TiN layer was formed on a mold face of the thus obtained metal mold by the ion plating method (PVD) under the following steps and conditions so as to prepare a metal mold for molding a resin.

### [Steps of vapor deposition]

① Step of ultrasonic cleaning with an organic solvent (acetone).
② Step of Ar ion bombardment treatment to remove dirt on a base material (a mold face).
   Conditions: Vacuum-achieving pressure: 2.6 × 10⁻³ Pa
   Treatment temperature and duration: after heating at 150°C for one hour, 10-minute treatment
③ Step of Ti sputtering cleaning (to improve adhesion to the base material).
   - 1000 volts of bias voltage was applied on a Ti substrate and an arc discharge was conducted from a Ti cathode.
   Conditions: Arc discharge current: 60 A
   Discharge duration: 2 minutes
④ Step of vapor deposition treatment.
   Conditions: Bias discharge: -250 V
   Arc discharge current: 60 A
   N₂ gas flow: 25 SCCM
   Reaction pressure: 0.13 Pa
   Film-forming duration: 1 hour
   Film thickness: 3 µ m

### EXAMPLE 2

On a mold face of the same metal mold as was used in Example 1, TiN was deposited by the plasma CVD method under the following steps and conditions, followed by Ti(C,N) and TiC deposition, respectively, in the order referred so that a 1 µ m thick TiN layer, a 1 µ m thick Ti(C,N) layer and a 2 µ m thick TiC layer were formed, respectively. Consequently, obtained was a metal mold for molding a resin on which a mold releasability-providing film in a three-layer structure of 4 µ m in thickness in total was formed.

### [Steps of vapor deposition]

① Step of ultrasonic cleaning with an organic solvent (acetone).
② Step of forming a TiN layer.
   Conditions: Vacuum-achieving pressure: 0.13 Pa
   TiCl₄ gas flow: 20 SCCM
   N₂ gas flow: 50 SCCM
   H₂ gas flow: 200 SCCM
   Reaction pressure: 133 Pa
   High-frequency power: 1 kW
   Film-forming duration: 20 minutes
   Film thickness: 1 µ m
③ Step of forming a Ti(C,N) layer.
   Conditions: TiCl₄ gas flow: 20 SCCM
   CH₄ gas flow: 20 SCCM
   N₂ gas flow: 50 SCCM
   H₂ gas flow: 200 SCCM
   Reaction pressure: 133 Pa
   High-frequency power: 1 kW
   Film-forming duration: 20 minutes
   Film thickness: 1 µ m
④ Step of forming a TiC layer.
   Conditions: TiCl₄ gas flow: 20 SCCM
   CH₄ gas flow: 30 SCCM
   H₂ gas flow: 200 SCCM
   Reaction pressure: 130 Pa
   High-frequency power: 1 kW
   Film-forming duration: 40 minutes
   Film thickness: 2 µ m

### EXAMPLE 3

On a mold face of the same metal mold as was used in Example 1, TiN was deposited by the ion plating method (PVD) under the following steps and conditions, followed by Ti(C,N) deposition so that a 0.7 µ m thick TiN layer and a 2.3 µ m thick Ti(C,N) layer were formed, respectively, in the order referred. Consequently, obtained was a metal mold for molding a resin on which a mold releasability-providing film in a two-layer structure of 3 µ m in thickness in total was formed.

### [Steps of vapor deposition]

① Step of ultrasonic cleaning with an organic solvent (acetone).
② Step of Ar ion bombardment treatment to remove dirt on a base material (a mold face).
   Conditions: Vacuum-achieving pressure: 2.6 × 10⁻³ Pa
   Treatment temperature and duration: after heating at 150°C for one hour, 10-minute treatment
③ Step of Ti sputtering cleaning (to improve adhesion to the base material).
   - 1000 volts of bias voltage was applied on a Ti substrate and an arc discharge was conducted from a Ti cathode.
   Conditions: Arc discharge current: 60 A
   Discharge duration: 2 minutes
④ Step of forming a TiN layer (vapor deposition treatment).
   Conditions: Bias discharge: -250 V
   Arc discharge current: 70 A
   N₂ gas flow: 25 SCCM
   Reaction pressure: 4.0 Pa
   Film-forming duration: 10 minutes
   Film thickness: 0.7 µ m
⑤ Step of forming a Ti(C,N) layer (vapor deposition treatment).
   Conditions: Bias discharge: -350 V
   Arc discharge current: 70 A
   N₂ gas flow: 16 SCCM
   C₂H₂ gas flow: 15 SCCM
   Reaction pressure: 6.0 Pa
   Film-forming duration: 40 minutes
   Film thickness: 2.3 µ m

### EXAMPLE 4

On a mold face of the same metal mold as was used in Example 1, TiN was deposited by the ion plating method (PVD) under the following steps and conditions, followed by TiC deposition so that a 0.7 µ m thick TiN layer and a 2.3 µ m thick TiC layer were formed, respectively, in the order referred. Consequently, obtained was a metal mold for molding a resin on which a mold releasability-providing film in a two-layer structure of 3 µ m in thickness in total was formed.

### [Steps of vapor deposition]

① Step of ultrasonic cleaning with an organic solvent (acetone).
② Step of Ar ion bombardment treatment to remove dirt on a base material (a mold face).
   Conditions: Vacuum-achieving pressure: 2.6 × 10⁻³ Pa
   Treatment temperature and duration: after heating at 150°C for one hour, 10-minute treatment
③ Step of Ti sputtering cleaning (to improve adhesion to the base material).
   - 1000 volts of bias voltage was applied on a Ti substrate and an arc discharge was conducted from a Ti cathode.
   Conditions: Arc discharge current: 60 A
   Discharge duration: 2 minutes
④ Step of forming a TiN layer (vapor deposition treatment).
   Conditions: Bias discharge: -250 V
   Arc discharge current: 70 A
   N₂ gas flow: 25 SCCM
   Reaction pressure. 4.0 Pa
   Film-forming duration: 10 minutes
   Film thickness: 0.7 µ m
⑤ Step of forming a TiC layer (vapor deposition treatment).
   Conditions: Bias discharge: -350 V
   Arc discharge current: 70 A
   CH₂ gas flow: 25 SCCM
   Reaction pressure: 4.0 Pa
   Film-forming duration: 40 minutes
   Film thickness: 2.3 µ m

### EXAMPLE 5

On a mold face of the same metal mold as was used in Example 1, deposition was conducted by the ion plating method (PVD) under the following steps and conditions so as to prepare a metal mold for molding a resin on which a mold releasability-providing film made of a 3 µ m thick CrN layer was formed.

### [Steps of vapor deposition]

① Step of ultrasonic cleaning with an organic solvent (acetone).
② Step of Ar ion bombardment treatment to remove dirt on a base material (a mold face).
   Conditions: Vacuum-achieving pressure: 2.6 × 10⁻³ Pa
   Treatment temperature and duration: after heating at 150°C for one hour, 10-minute treatment
③ Step of Cr sputtering cleaning (to improve adhesion to the base material).
   - 1000 volts of bias voltage was applied on a Cr substrate and an arc discharge was conducted from a Cr cathode.
   Conditions: Arc discharge current: 60 A
   Discharge duration: 2 minutes
④ Step of forming a CrN layer (vapor deposition treatment).
   Conditions: Bias discharge: -250 V
   Arc discharge current: 50 A
   N₂ gas flow: 25 SCCM
   Reaction pressure: 1.3 Pa
   Film-forming duration: 40 minutes
   Film thickness: 3 µ m

### COMPARATIVE EXAMPLE 1

Cemented carbide was used as a metal mold material, on which a cavity part and the like were formed by cutting work and/or electrical discharge machining so as to prepare a desired metal mold (see Fig. 1). A mold releasability-providing film was not formed.

### COMPARATIVE EXAMPLE 2

High speed steel was used as a metal mold material, on which a cavity part and the like were formed by cutting work and/or electrical discharge machining so as to prepare a desired metal mold (see Fig. 1). A mold releasability-providing film was not formed.

### COMPARATIVE EXAMPLE 3

SKD 11 was used as a metal mold material, on which a cavity part and the like were formed by cutting work and/or electrical discharge machining so as to prepare a desired metal mold (see Fig. 1). A mold releasability-providing film was not formed.

The results of the measurements of the surface hardness of the metal molds of Examples 1 - 5 and Comparative Examples 1 - 3 are shown in the following Table 1.

**TABLE 1**

| | hardness (mHv) |
|---|---|
| Comparative Example 1 | 1400 |
| Comparative Example 2 | 950 |
| Comparative Example 3 | 850 |
| Example 1 | 2000 |
| Example 2 | 3200 |
| Example 3 | 2800 |
| Example 4 | 3000 |
| Example 5 | 2000 |
| Filler (silica) | 1000 to 1100 |

As obvious from Table 1, the surface harnesses of the metal molds of Examples 1 - 5 are far higher than those of the metal molds of Comparative Examples 1 -3, and are higher than that of the fillers (silica) used to fill the resin materials.

With the metal molds of Examples 1 - 5 and Comparative Examples 1 - 3, molding of resins was carried out under the following molding conditions.

### [Molding conditions]

| Resin materials: | | |
|---|---|---|
| Main agent | Novolak-type epoxy resin | 100 parts by weight |
| Fire retardant | Brominated novolak epoxy resin | 25 parts by weight |
| Hardener | Phenol novolak resin | 50 parts by weight |
| Hardening accelerator | Triphenylphosphine | 2 parts by weight |
| Filler | Silica (spherical and crushed) | 800 parts by weight |
| Silane coupling agent | γ-glycidoxypropyltrimethoxysilane | 8 parts by weight |
| Fire retarding assistant | Antimony trioxide | 5 parts by weight |
| Mold release agent | Carnauba wax | 2 parts by weight |
| Coloring agent | Carbon black | 1 parts by weight |

Molding method: Transfer molding, continuous molding (10 times)
Molding machine: Original machine of Tokai Rubber Industries, Ltd.
Molding temperature: 175 °C
Molding pressure: 100 kg/cm²
Molding duration: 5 min.

In addition, with the metal molds of Examples 1 - 5 and Comparative Examples 1 - 3, a mold release agent consisting essentially of fluorine compounds was applied on the mold faces of the metal molds prior to molding.

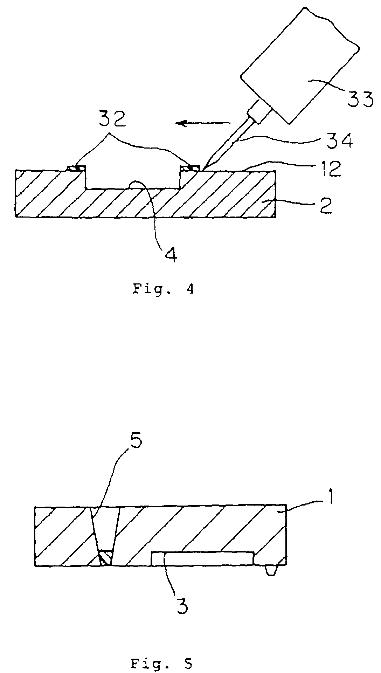

The resins thus obtained in the foregoing manner were evaluated in terms of mold releasability as follows. That is, after the resin materials were injected and solidified and the moldings were taken out, air (pressure: 1.5 kg/cm²) was blown on the remaining resin. Thereafter, as shown in Fig. 4, remaining resin 32, which was adhered to a mold face 12 of a lower mold 2 and was not removed by the air blast, were scraped off with a bamboo spatula (Ø 2.5) attached to a CPU push-pull gauge 33 (Model 9501, manufactured by Aikoh Engineering Co., Ltd.). The figures measured by the push-pull gauge 33 were evaluated as the adhesion of the remaining resins. The results are shown in the following Tables 2 and 3.

**TABLE 2**

| unit: (kgf) | | | | |
|---|---|---|---|---|
| | | Comparative Examples | | |
| | | 1 | 2 | 3 |
| Change in adhesion by continuous molding | First time | 0.43* | 0.39* | 0.37* |
| | Second time | 0.27* | 0.32* | 0.28* |
| | Third time | 0.22* | 0.20* | 0.20* |
| | Fourth time | 0.20* | 0.17* | 0.17* |
| | Fifth time | 0.14* | 0.15* | 0.16* |
| | Sixth time | 0.17* | 0.16* | 0.11* |
| | Seventh time | 0.12* | 0.14* | 0.10* |
| | Eighth time | 0.10* | 0.11* | 0.09* |
| | Ninth time | 0.08* | 0.10* | 0.08* |
| | Tenth time | 0.09* | 0.06* | 0.06* |
| Application of fluorine compound-containing mold release agent | | 0.08* | 0.06* | 0.05* |

| | | | | |
|---|---|---|---|---|
| *: Thin burrs are not removed. | | | | |

**TABLE 3**

| unit: (kgf) | | | | | | |
|---|---|---|---|---|---|---|
| | | Examples | | | | |
| | | 1 | 2 | 3 | 4 | 5 |
| Change in adhesion by continuous molding | First time | 0.33* | 0.41* | 0.35* | 0.33* | 0.31* |
| | Second time | 0.32* | 0.18* | 0.18* | 0.18* | 0.12* |
| | Third time | 0.18* | 0.14* | 0.07* | 0.08* | 0.06* |
| | Fourth time | 0.10* | 0.02* | 0.06* | 0.05* | 0.04* |
| | Fifth time | 0.11* | 0.00 | 0.04* | 0.03* | 0.03* |
| | Sixth time | 0.06* | 0.00 | 0.03* | 0.03* | 0.00 |
| | Seventh time | 0.04* | 0.00 | 0.02* | 0.00 | 0.00 |
| | Eighth time | 0.02* | 0.00 | 0.00 | 0.00 | 0.00 |
| | Ninth time | 0.02* | 0.00 | 0.00 | 0.00 | 0.00 |
| | Tenth time | 0.00 | 0.00 | 0.00 | 0.00 | 0.00 |
| Application of fluorine compound-containing mold release agent | | 0.00 | 0.00 | 0.00 | 0.00 | 0.00 |

| | | | | | | |
|---|---|---|---|---|---|---|
| *: Thin burrs are not removed. | | | | | | |

As obvious from the above Tables 2 and 3, it is known that, in the course of repetitive molding, the adhesion gradually deteriorates due to the transfer of the mold release agent in the resin materials for each metal mold. However, compared with Comparative Examples 1 - 3, the deterioration in adhesion is greater (the adhesion deteriorates after less times of repetitive molding) in Examples 1 - 5. Moreover, although the adhesion lowered in Comparative Examples 1 - 3, thin burrs remained and were not be able to be removed completely. Namely, it is reaffirmed that remaining resins may not completely be removed by the conventional technique, that is, the method in which a mold release agent is kneaded into resin materials. On the other hand, in Examples 1 - 5, it is known that the mold releasability obviously is improved compared with the conventional manner. In particular, in Example 2 in which the mold releasability-providing film was formed in a three-layer structure of TiN, Ti(C,N) and TiC, the resins did not remain at all or, even if the resins remained, such remaining resins were able to be removed by only the air blast.

In the meantime, due to poor mold releasability in Comparative Examples 1 - 3, as shown in Fig. 5, the solidified resins, when removed after molding, broke with 2 to 5 mm thereof remaining in an opening portion (wherein the diameter thereof is throttled) of a resin injection hole 5 of an upper mold 1, which may cause automatic continuous molding to be impossible. On the contrary, since the mold releasability improved in Examples 1 - 5, such a problem did not occur, nor was productivity impeded.

### EFFECTS OF THE INVENTION

As described heretofore, with the metal mold for molding a resin according to the present invention, mold releasability remarkably improves due to the deterioration in adhesion to the resin. Therefore, unlike the conventional technique, portions of a sprue, a runner, gates, a molding and the like and hardened resins such as a burr and the like do not stick to or remain on the mold faces, and even if they remain, such remaining resin may be removed by an air blast. Thus, the automation of molding work may be realized, which whereby produces cost reduction as well as improvement in productivity. Further, there is no problems such as defective products being manufactured where the remaining resins intervene in the metal mold or the metal mold itself breaks. Furthermore, the plastic deformation of the metal mold in clamping is prevented.

## Claims

1. A metal mold for molding an epoxy resin where epoxy resin materials are injected and solidified so as to produce an epoxy resin molding in a desired shape, wherein a portion of a mold face with which the epoxy resin materials come into contact is coated with inorganic matter by a vapor deposition method so as to form a film providing mold releasability from solidified epoxy resin.

2. The metal mold for molding an epoxy resin according to claim 1, wherein the mold releasability-providing film is titanium nitride film, titanium carbide film, titanium carbo-nitride film, chromium nitride film, or combination thereof.

3. The metal mold for molding an epoxy resin according to claim 1 or 2, wherein the mold releasability-providing film is a multi-layer structure in which titanium carbide film and/or titanium carbo-nitride film is layered onto titanium nitride film.

4. The metal mold for molding an epoxy resin according to claim 3, wherein the mold releasability-providing film is a three-layer structure in which titanium carbo-nitride film is formed on a base titanium nitride film, and titanium carbide film is further formed on the titanium carbo-nitride film.

5. The metal mold for molding an epoxy resin according to any preceding claim, wherein a surface of the mold releasability-providing film has a mold release agent.
